# EUROPEAN PATENT APPLICATION

(11) **EP 4 525 400 A1**
(43) Date of publication of application: **19.03.2025**
(21) Application number: 23814637.7
(22) Date of filing: 03.02.2023
(51) Int. Cl.: H04L 49/60, H04L 47/10

(54) **MESSAGE SENDING METHOD, NETWORK DEVICE AND SYSTEM**

(30) Priority: 02.06.2022 CN 202210620757
(71) Applicant: Huawei Technologies Co., Ltd., Shenzhen, Guangdong 518129 (CN)
(72) Inventor: ZHUANG, Shunwan, Shenzhen, Guangdong 518129 (CN); WANG, Haibo, Shenzhen, Guangdong 518129 (CN); CHEN, Shuanglong, Shenzhen, Guangdong 518129 (CN); WU, Hong, Shenzhen, Guangdong 518129 (CN); DONG, Jie, Shenzhen, Guangdong 518129 (CN); PANG, Donglei, Shenzhen, Guangdong 518129 (CN)
(74) Representative: Isarpatent
(86) International application number: PCT/CN2023/074334
(87) International publication number: WO 2023/231438

(57) **Abstract**

This application provides a packet sending method, a network device, and a system. The method includes: A first network device receives an advertisement message sent by a second network device, where the advertisement message includes segment routing policy SR policy information and traffic feature information, and the SR policy information includes a segment identifier list SID list. The first network device establishes a correspondence between the traffic feature information and the SID list according to the advertisement message, where the correspondence is used to guide forwarding of a packet including the traffic feature information. This application is used to improve communication efficiency between network devices.

## Description

This application claims priority to Chinese Patent Application No. 202210620757.5, filed with the China National Intellectual Property Administration on June 2, 2022 and entitled "PACKET SENDING METHOD, NETWORK DEVICE, AND SYSTEM", which is incorporated herein by reference in its entirety.

### TECHNICAL FIELD

This application relates to the communication field, and in particular, to a packet sending method, a network device, and a system.

### BACKGROUND

A tunneling (Tunneling) technology is a technology that establishes a dedicated virtual link between network devices in a transmission network to perform data transmission. The virtual link used for data transmission is referred to as a "tunnel".

The transmission network includes a network device (such as a router or a switch) used for data transmission and a controller for controlling the network device. A connection is established between the controller and the network device according to a preset communication protocol, for example, a border gateway protocol (border gateway protocol, BGP). The controller delivers a control message to the network device by using the connection to the network device, so that the network device executes a task of establishing a tunnel or steer traffic that meets a feature to a specific tunnel, and the like.

Currently, a control message sent by a controller to a network device can implement only a single function, resulting in low communication efficiency and affecting performance of a transmission network.

### SUMMARY

This application provides a packet sending method, a network device, and a system, to improve communication efficiency between network devices.

According to a first aspect, a packet forwarding method is provided. The method is applied to a first network device, and the method includes: The first network device receives an advertisement message sent by a second network device, where the advertisement message includes segment routing policy SR policy information and traffic feature information, and the SR policy information includes a segment identifier list SID list. The first network device establishes a correspondence between the traffic feature information and the SID list according to the advertisement message, where the correspondence is used to guide forwarding of a packet including the traffic feature information.

In this application, it is considered that when traffic needs to be matched with an SR policy, the second network device may send, to the first network device, an advertisement message that carries both SR policy information (where the SR policy information includes a SID list indicating a transmission path) of the to-be-established SR policy and traffic feature information of the to-be-matched traffic. In this way, after the second network device sends the advertisement message to the first network device, the first network device may establish a correspondence between the traffic feature information and the SID list according to the advertisement message, to guide forwarding of a packet including the traffic feature information or guide forwarding of a packet matching the traffic feature information, so that the packet including the traffic feature information or the packet matching the traffic feature information is forwarded through the transmission path of the SID list. In the technical solutions provided in this application, in one aspect, after establishing the SR policy based on the SR policy information carried in the advertisement message, the first network device may establish the correspondence between the traffic feature information and the SID list based on the traffic feature information carried in the advertisement message without waiting for another indication, to guide packet forwarding, so as to reduce a resource waste. In another aspect, in this application, the advertisement message delivered by the second network device to the first network device carries both the SR policy information and the traffic feature information. This improves message delivery efficiency.

In an implementation, that the first network device establishes a correspondence between the traffic feature information and the SID list according to the advertisement message includes: The first network device generates a routing entry according to the advertisement message, where the routing entry includes the correspondence between the traffic feature information and the SID list. In this implementation, the correspondence between the traffic feature information and the SID list may be established by creating a routing entry including the traffic feature information and the SID list. Therefore, in a subsequent process, after receiving the packet that carries the traffic feature information, the first network device may guide the packet forwarding according to the routing entry.

In an implementation, the routing entry is a Flowspec routing entry. In this implementation, the correspondence between the traffic feature information and the SID list may be established by creating a Flowspec routing entry including the traffic feature information and the SID list. Therefore, in the subsequent process, after receiving the packet that carries the traffic feature information, the first network device may guide the packet forwarding according to the Flowspec routing entry.

In an implementation, the advertisement message is a border gateway protocol flow specification message BGP Flowspec message. In this implementation, the traffic feature information and the SR policy information that includes the SID list may be sent to the first network device by sending a BGP Flowspec message. Compared with a method in which the SR policy information and the traffic feature information need to be respectively sent by using an SR policy message and a BGP Flowspec message in a conventional technology, this implementation improves communication efficiency between network devices.

In an implementation, the advertisement message includes a first path attribute field, and the first path attribute field carries the SR policy information. In this implementation, the SR policy information is carried in the path attribute field of the BGP Flowspec message, so that the first network device can obtain the SR policy information by parsing the corresponding path attribute field.

In an implementation, the advertisement message includes one or more extended community attributes, and each extended community attribute carries a segment identifier SID in the SID list included in the SR policy information. In this implementation, the SR policy information is carried in the one or more extended community attribute fields of the BGP Flowspec message, so that the first network device can obtain the SR policy information by parsing the corresponding one or more extended community attribute fields.

In an implementation, the one or more extended community attributes each further include a ranking identifier corresponding to the carried SID, and the ranking identifier indicates a ranking of the corresponding SID in the SID list. In this implementation, the ranking identifier is carried in the one or more extended community attribute fields, so that the first network device can determine the ranking of the corresponding SID in the SID list by parsing the ranking identifier carried in the corresponding one or more extended community attribute fields.

In an implementation, the routing entry is an SR policy routing entry. In this implementation, the correspondence between the traffic feature information and the SID list may be established by creating an SR policy routing entry including the traffic feature information and the SID list. Therefore, in the subsequent process, after receiving the packet that carries the traffic feature information, the first network device may guide the packet forwarding according to the SR policy routing entry.

In an implementation, the advertisement message is a segment routing policy message SR policy message. In this implementation, the traffic feature information and the SR policy information that includes the SID list may be sent to the first network device by sending an SR policy message. Compared with a method in which the SR policy information and the traffic feature information need to be respectively sent by using an SR policy message and a BGP Flowspec message in a conventional technology, this implementation improves communication efficiency between network devices.

In an implementation, the SR policy message includes a second path attribute field, and the second path attribute field carries the traffic feature information.

In an implementation, the routing entry further includes a color color of the SR policy. In this implementation, the color of the SR policy is carried in the routing entry, so that in a subsequent packet forwarding process, the first network device forwards the packet by using the SR policy based on a color that is carried in the received packet and that is the same as the color of the SR policy in the routing entry.

In an implementation, the establishing a correspondence between the traffic feature information and the SID list according to the advertisement message includes: generating an SR policy routing entry and a Flowspec routing entry according to the advertisement message, where the Flowspec routing entry includes the traffic feature information, and the Flowspec routing entry is associated with the SR policy routing entry. In this implementation, after the first network device receives the advertisement message, the advertisement message may be an SR policy message or a BGP Flowspec message. The first network device may separately generate a Flowspec routing entry including the traffic feature information and an SR policy routing entry including the SID list. Then, the correspondence between the traffic feature information and the SID list is established by establishing an association relationship between the two routing entries. After the first network device establishes the correspondence between the traffic feature information and the SID list, when the first network device receives the packet that meets the traffic feature information, the first network device may forward the packet based on the correspondence between the traffic feature information and the SID list by using the SR policy that uses the SID list, to implement effect of directing traffic to the specific SR policy.

In an implementation, the method further includes: The first network device receives a packet, where the packet includes the traffic feature information. The first network device forwards, based on the correspondence, the packet along a forwarding path corresponding to the SID list.

In an implementation, the traffic feature information includes one or more of a destination address, a source address, an IP protocol number, a destination port number, a source port number, a packet length, an internet control message protocol ICMP type, ICMP code, a TCP flag, a differentiated services code point DSCP identifier, and an IP segmentation type.

According to a second aspect, a packet forwarding method is provided. The method is applied to a second network device and includes: generating an advertisement message, where the advertisement message includes segment routing policy SR policy information and traffic feature information, and an SR policy includes a segment identifier list SID list; and sending the advertisement message to a first network device, where the advertisement message indicates the first network device to establish a correspondence between the traffic feature information and the SID list, and the correspondence is used to guide forwarding of a packet including the traffic feature information.

In an implementation, the advertisement message is a border gateway protocol flow specification message BGP flowspec message.

In an implementation, the advertisement message includes a first path attribute field, and the first path attribute field carries the SR policy information.

In an implementation, the advertisement message includes one or more extended community attributes, and the one or more extended community attributes each carry a segment identifier SID in the SID list included in the SR policy information.

In an implementation, the one or more extended community attributes each further include a ranking identifier corresponding to the carried SID, and the ranking identifier indicates a ranking of the corresponding SID in the SID list.

In an implementation, the advertisement message is a segment routing policy message SR policy message.

In an implementation, the advertisement message includes a second path attribute field, and the second path attribute field carries the traffic feature information.

In an implementation, the traffic feature information includes one or more of a destination address, a source address, an IP protocol number, a destination port number, a source port number, a packet length, an internet control message protocol ICMP type, ICMP code, a TCP flag, a differentiated services code point DSCP identifier, and an IP segmentation type.

According to a third aspect, a first network device is provided, including: a communication unit, configured to receive an advertisement message sent by a second network device, where the advertisement message includes segment routing policy SR policy information and traffic feature information, and the SR policy information includes a segment identifier list SID list; and a processing unit, configured to establish a correspondence between the traffic feature information and the SID list according to the advertisement message, where the correspondence is used to guide forwarding of a packet including the traffic feature information.

In an implementation, that the processing unit is configured to establish the correspondence between the traffic feature information and the SID list according to the advertisement message includes: The processing unit is specifically configured to generate a routing entry according to the advertisement message, where the routing entry includes the correspondence between the traffic feature information and the SID list.

In an implementation, the routing entry is a Flowspec routing entry.

In an implementation, the advertisement message is a border gateway protocol flow specification message BGP Flowspec message.

In an implementation, the advertisement message includes a first path attribute field, and the first path attribute field carries the SR policy information.

In an implementation, the advertisement message includes one or more extended community attributes, and each extended community attribute carries a segment identifier SID in the SID list included in the SR policy information.

In an implementation, the one or more extended community attributes each further include a ranking identifier corresponding to the carried SID, and the ranking identifier indicates a ranking of the corresponding SID in the SID list.

In an implementation, the routing entry is an SR policy routing entry.

In an implementation, the advertisement message is a segment routing policy message SR policy message.

In an implementation, the advertisement message includes a second path attribute field, and the second path attribute field carries the traffic feature information.

In an implementation, the routing entry further includes a color color of the SR policy.

In an implementation, that the processing unit is configured to establish the correspondence between the traffic feature information and the SID list according to the advertisement message includes: The processing unit is configured to generate an SR policy routing entry and a Flowspec routing entry according to the advertisement message, where the Flowspec routing entry includes the traffic feature information, and the Flowspec routing entry is associated with the SR policy routing entry.

In an implementation, the communication unit is further configured to receive a packet, where the packet includes the traffic feature information; and the processing unit is further configured to forward, based on the correspondence, the packet along a forwarding path corresponding to the SID list.

In an implementation, the traffic feature information includes one or more of a destination address, a source address, an IP protocol number, a destination port number, a source port number, a packet length, an internet control message protocol ICMP type, ICMP code, a TCP flag, a differentiated services code point DSCP identifier, and an IP segmentation type.

According to a fourth aspect, a second network device is provided, including: a processing unit, configured to generate an advertisement message, where the advertisement message includes segment routing policy SR policy information and traffic feature information, and an SR policy includes a segment identifier list SID list; and a communication unit, configured to send the advertisement message to a first network device, where the advertisement message indicates the first network device to establish a correspondence between the traffic feature information and the SID list, and the correspondence is used to guide forwarding of a packet including the traffic feature information.

In an implementation, the advertisement message is a border gateway protocol flow specification message BGP Flowspec message.

In an implementation, the advertisement message includes a first path attribute field, and the first path attribute field carries the SR policy information.

In an implementation, the advertisement message includes one or more extended community attributes, and the one or more extended community attributes each carry a segment identifier SID in the SID list included in the SR policy information.

In an implementation, the one or more extended community attributes each further include a ranking identifier corresponding to the carried SID, and the ranking identifier indicates a ranking of the corresponding SID in the SID list.

In an implementation, the advertisement message is a segment routing policy message SR policy message.

In an implementation, the advertisement message includes a second path attribute field, and the second path attribute field carries the traffic feature information.

In an implementation, the traffic feature information includes one or more of a destination address, a source address, an IP protocol number, a destination port number, a source port number, a packet length, an internet control message protocol ICMP type, ICMP code, a TCP flag, a differentiated services code point DSCP identifier, and an IP segmentation type.

According to a fifth aspect, a first network device is provided, including a processor and an interface. The processor receives or sends data through the interface, and the processor is configured to implement the method in any one of the first aspect or the implementations of the first aspect.

According to a sixth aspect, a second network device is provided, including a processor and an interface. The processor receives or sends data through the interface, and the processor is configured to implement the method in any one of the second aspect or the implementations of the second aspect.

According to a seventh aspect, a network system is provided, including the first network device in any one of the third aspect, the implementations of the third aspect, or the fifth aspect and the second network device in any one of the fourth aspect, the implementations of the fourth aspect, or the sixth aspect.

According to an eighth aspect, a computer-readable storage medium is provided. The computer-readable storage medium stores instructions, and when the instructions are run on a processor, the method in any one of the first aspect or the implementations of the first aspect or the second aspect or the implementations of the second aspect is implemented.

According to a ninth aspect, a computer program product is provided. The computer program product includes instructions, and when the instructions are run on a processor, the method in any one of the first aspect or the implementations of the first aspect or the second aspect or the implementations of the second aspect is implemented.

According to a tenth aspect, a chip is provided, including a memory and a processor. The memory is configured to store computer instructions, and the processor is configured to invoke the computer instructions from the memory and run the computer instructions, to implement the method in any one of the first aspect or the implementations of the first aspect or the second aspect or the implementations of the second aspect.

### BRIEF DESCRIPTION OF DRAWINGS

FIG. 1 is a schematic diagram of a tunnel path of an SR-MPLS TE policy according to an embodiment of this application;
FIG. 2 is a schematic diagram of a structure of a transmission network according to an embodiment of this application;
FIG. 3 is a schematic flowchart 1 of a packet forwarding method according to an embodiment of this application;
FIG. 4 is a schematic flowchart 2 of a packet forwarding method according to an embodiment of this application;
FIG. 5 is a schematic flowchart 3 of a packet forwarding method according to an embodiment of this application;
FIG. 6 is a schematic diagram 1 of SR policy information according to an embodiment of this application;
FIG. 7 is an example diagram 1 of sending, by a controller (controller), a BGP Flowspec message to a head end (HeadEnd) device of an SR policy according to an embodiment of this application;
FIG. 8 is an example diagram 2 of sending, by a controller (controller), a BGP Flowspec message to a head end (HeadEnd) device of an SR policy according to an embodiment of this application;
FIG. 9 is a schematic diagram 1 of a structure of an extended community attribute in a BGP Flowspec message according to an embodiment of this application;
FIG. 10 is a schematic diagram 2 of a structure of an extended community attribute in a BGP Flowspec message according to an embodiment of this application;
FIG. 11 is a schematic flowchart 4 of a packet forwarding method according to an embodiment of this application;
FIG. 12 is a schematic diagram 2 of SR policy information according to an embodiment of this application;
FIG. 13 is an example diagram of sending, by a controller (controller), an SR policy message to a head end (HeadEnd) device of an SR policy according to an embodiment of this application;
FIG. 14 is a schematic diagram 1 of a structure of a network device according to an embodiment of this application;
FIG. 15 is a schematic diagram 2 of a structure of a network device according to an embodiment of this application;
FIG. 16 is a schematic diagram 3 of a structure of a network device according to an embodiment of this application; and
FIG. 17 is a schematic diagram 4 of a structure of a network device according to an embodiment of this application.

### DESCRIPTION OF EMBODIMENTS

The following describes the technical solutions in embodiments of this application with reference to the accompanying drawings in embodiments of this application. To clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

For ease of understanding the technical solutions provided in embodiments of this application, technologies in embodiments of this application are first described.

### 1. Segment routing-multiprotocol label switching traffic engineering policy (segment routing-multiprotocol label switching traffic engineering policy, SR-MPLS TE policy)

The SR policy is a tunnel traffic steering technology developed based on an SR technology.

In an SR-MPLS TE policy tunnel, a tunnel path may be represented as a segment list (segment List) or a segment identifier list (segment ID List, SID list). Each SID list indicates an end-to-end path from a source node to a destination node of the tunnel. In other words, if a data packet is imported into the SR-MPLS TE policy tunnel, after the SID list is added to the data packet by the source node of the tunnel, another device in a network executes an instruction embedded in the SID list, and sends the data packet to a next-hop node in the SID list through the tunnel path in the SID list until the data packet is sent to the destination node. A SID list: List<S1, S2, S3> is used as an example. The SID list indicates that after receiving a data packet, the source node of the tunnel adds the SID list to the data packet, and sends the data packet to an S1 node; after receiving the data packet, the S1 node sends the data packet to an S2 node; after receiving the data packet, the S2 node sends the data packet to an S3 node; and the S3 node sends the data packet to the destination node, to complete a transmission process of the data packet in the tunnel.

Specifically, in the SR-MPLS TE policy tunnel, SR-MPLS is used to represent each segment (segment) in the network. A SID list: List<SID 1, SID 2, SID 3> is used as an example. The SID 1, the SID 2, and the SID 3 are respectively SR-MPLS of the S1 node, the S2 node, and the S3 node.

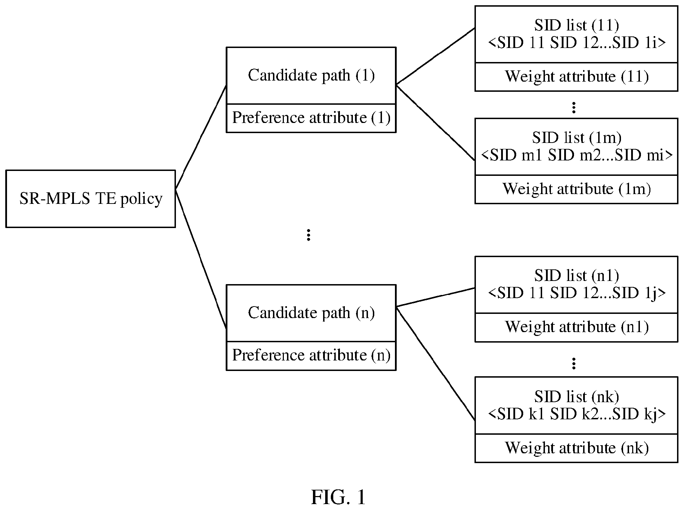

In addition, an SR-MPLS TE policy tunnel may include a plurality of candidate paths (Candidate Paths). As shown in FIG. 1, an SR-MPLS TE policy tunnel may include n candidate paths, to be specific, a candidate path (1) to a candidate path (n). Each candidate path carries a preference (preference) attribute. A candidate path with the highest preference serves as a primary path for the SR-MPLS TE policy tunnel, and a candidate path with the second highest preference serves as a hot-standby path for the SR-MPLS TE policy tunnel.

Each candidate path may correspond to a plurality of SID lists, and each SID list represents a transmission path. In other words, each candidate path of the SR-MPLS TE policy tunnel may be understood as a candidate path set, and each set includes a plurality of transmission paths represented by SID lists. Load balancing may be implemented among the plurality of SID lists. As shown in FIG. 1, in a candidate path, each SID list carries a weight (weight) attribute. During traffic transmission, one SID list may be selected from a plurality of SID lists based on a weight of each SID list to perform traffic transmission.

The SR-MPLS TE policy tunnel is described by using the following three parts.
(1) Head end (HeadEnd) device: The head end device indicates a generation node, namely, the source node, of the SR-MPLS TE policy tunnel.
(2) Color (Color): The color indicates an extended community (extended community) attribute carried by the SR-MPLS TE policy tunnel. Color identifies an SR-MPLS TE policy tunnel. In other words, BGP routes with a same Color attribute may use the SR-MPLS TE policy tunnel.
(3) Tail end (EndPoint) device: The tail end device indicates a destination address (namely, the destination node) of the SR-MPLS TE policy tunnel.

Color and EndPoint information is added to the SR-MPLS TE policy tunnel through configuration. During path calculation, the SR-MPLS TE policy tunnel calculates a forwarding path based on a Color attribute that represents a requirement of a service level agreement (service level agreement, SLA) of a service. A HeadEnd node uses a Color attribute and next-hop address information carried in a route to match a corresponding SR-MPLS TE policy tunnel, so as to forward service traffic.

For example, Color of an SR-MPLS TE policy tunnel is blue (blue), and EndPoint is an address a. If it is determined, according to an SLA of a service a, that Color corresponding to the service is blue, and a next-hop address of the service is the address a, it is determined that the service matches the SR-MPLS TE policy tunnel, and the SR-MPLS TE policy tunnel may be used to forward service traffic.

### 2. Segment routing over IPv6 traffic engineering policy (segment routing over IPv6 traffic engineering policy, SRv6 TE policy)

The SRv6 TE policy is a tunnel traffic steering technology developed based on SRv6. It is similar to an SR-MPLS TE policy that, in an SRv6 TE policy tunnel, a tunnel path may also be represented as a segment list (SID list), namely, a SID List (segment ID List).

In addition, an SRv6 TE policy tunnel may also include a plurality of candidate paths (Candidate Paths). For a specific path structure of the SRv6 TE policy tunnel, refer to corresponding descriptions of the path structure shown in FIG. 1. Details are not described herein again.

In addition, the SRv6 TE policy tunnel may also be described by using three parts: a head end (HeadEnd), a color (Color), and a tail end (EndPoint).

It is different from the SR-MPLS TE policy that, in the SRv6 TE policy tunnel, an IPv6 address is used to represent each segment (segment) in a network. A SID list: List<S1 S2 S3> is used as an example. In the SID list, IPv6 addresses of nodes S1, S2, and S3 are respectively used to represent the nodes. In addition, unless otherwise specified, for other content about the SRv6 TE policy within the scope of embodiments of this application, refer to the foregoing descriptions of the SR-MPLS TE policy.

It should be noted that, for ease of description, in embodiments of this application, a transmission channel for data transmission using the SR-MPLS TE policy technology is referred to as an SR-MPLS TE policy tunnel, and a transmission channel for data transmission using the SRv6 TE policy technology is referred to as an SRv6 TE policy tunnel. In some application scenarios, the name "tunnel" may not be used. Instead, the transmission channel for data transmission using the SR-MPLS TE policy technology is directly referred to as an SR-MPLS TE policy, and the transmission channel for data transmission using the SRv6 TE policy technology is directly referred to as an SRv6 TE policy. Whether the transmission channel is referred to as a tunnel is not limited in embodiments of this application.

In addition, for ease of description, in embodiments of this application, a tunnel traffic steering technology implemented by using an SR technology includes the SR-MPLS TE policy and the SRv6 TE policy, which are collectively referred to as a segment routing traffic engineering policy (segment routing traffic engineering policy, SR TE policy), briefly referred to as an SR policy. It may be understood that, in an actual application process, the SR policy described below may be specifically the SR-MPLS TE policy, the SRv6 TE policy, or another tunnel traffic steering technology implemented by using the SR technology. This may not be limited in embodiments of this application.

### 3. Border gateway protocol flow specification (border gateway protocol flow specification, BGP flow specification), briefly referred to as BGP Flowspec

In the BGP Flowspec, a controller may send a border gateway protocol flow specification message (BGP Flowspec message) to a network device by using a border gateway protocol session (BGP session) between the controller and the network device in network transmission, to transfer a traffic policy to the network device.

In a conventional technology, the BGP Flowspec message may carry a matching condition of traffic and an action to be performed after the traffic is matched. The matching condition of the traffic may be carried in network layer reachability information (network layer reachability information, NLRI), and the action to be performed after the traffic is matched is carried in an extended community attribute.

Specifically, the BGP Flowspec message may include a plurality of path attributes (path attributes), and the path attributes are respectively used to carry different information. The network layer reachability information and the extended community attribute are respectively path attributes in the BGP Flowspec message.

RFC 5575 is used as an example. The RFC 5575 defines 12 common traffic matching rules (including a destination address, a source address, an IP protocol number, a destination port number, a source port number, a packet length, an internet control message protocol (internet control message protocol, ICMP) type, ICMP code, a TCP flag, a differentiated services code point (differentiated services code point, DSCP) identifier, and an IP segmentation type). The 12 traffic matching rules are transferred as network layer reachability information in the BGP Flowspec message.

In addition, the RFC 5575 defines four common traffic processing behaviors (including discarding traffic, limiting a traffic rate, changing a DSCP value of a packet, and redirecting to a virtual private network (virtual private network, VPN)). The four processing behaviors are transferred as extended community attributes in the BGP Flowspec message.

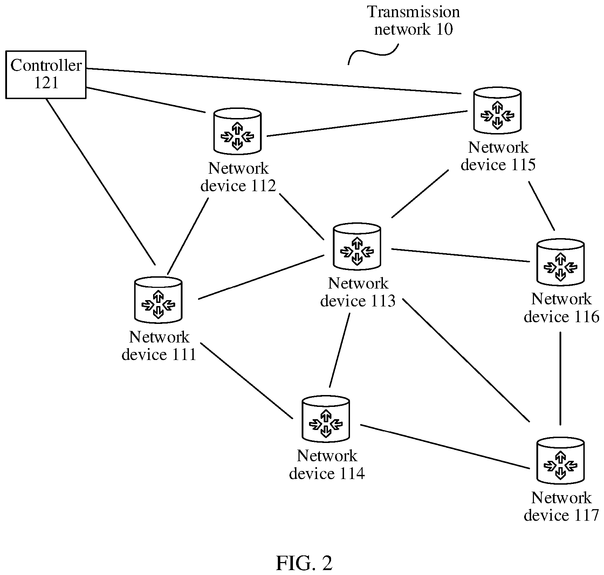

The following describes application scenarios in embodiments of this application with reference to the accompanying drawings. Specifically, FIG. 2 is a schematic diagram of a structure of a transmission network according to an embodiment of this application. The transmission network 10 includes a plurality of network devices. In the figure, a network device 111 to a network device 117 are used as an example for description. It may be understood that FIG. 2 merely describes an example of a possible structure of network devices, to describe the technical solutions provided in embodiments of this application. In an actual application process, a transmission network may include more or fewer network devices, and a structure of the transmission network may be more complex or simpler than that of the transmission network 10. This is not limited in embodiments of this application.

The network devices may be connected in a wired or wireless manner, so that data transmission is performed between the network devices. In the actual application process, each network device may be a hardware device such as a switch, an access switch, or a router; or each network device may be understood as some software/hardware functional modules having a separate access address in the switch, the access switch, or the router. In this case, each network device may be understood as a transmission node in the transmission network. A hardware type of each network device may not be limited in embodiments of this application.

In addition, a transmission network 20 further includes a controller 121 connected to one or more network devices. The controller 121 may deliver a control message to the network device by using a connection to the network device, so that the network device executes a task of establishing an SR policy or steer traffic that meets a feature to a specific SR policy. For example, the controller 121 may send a control message to the one or more network devices (for example, the network device 111, the network device 112, and the network device 115 in the figure) directly connected to the controller 121, to control the network device to execute a corresponding task. In addition, the controller 121 may further control, through a communication link between network devices, a network device (for example, a network device other than the network device 111, the network device 112, and the network device 115 in FIG. 2) that is not directly connected to the controller 121. It should be noted that the controller 121 in FIG. 2 is merely an example of being directly connected to the network device 111, the network device 112, and the network device 115. In the actual application process, the controller 121 may be connected to more or fewer network devices, to control the network device connected to the controller 121.

The following describes in detail the technical solutions provided in embodiments of this application with reference to the transmission network 10 shown in FIG. 2.

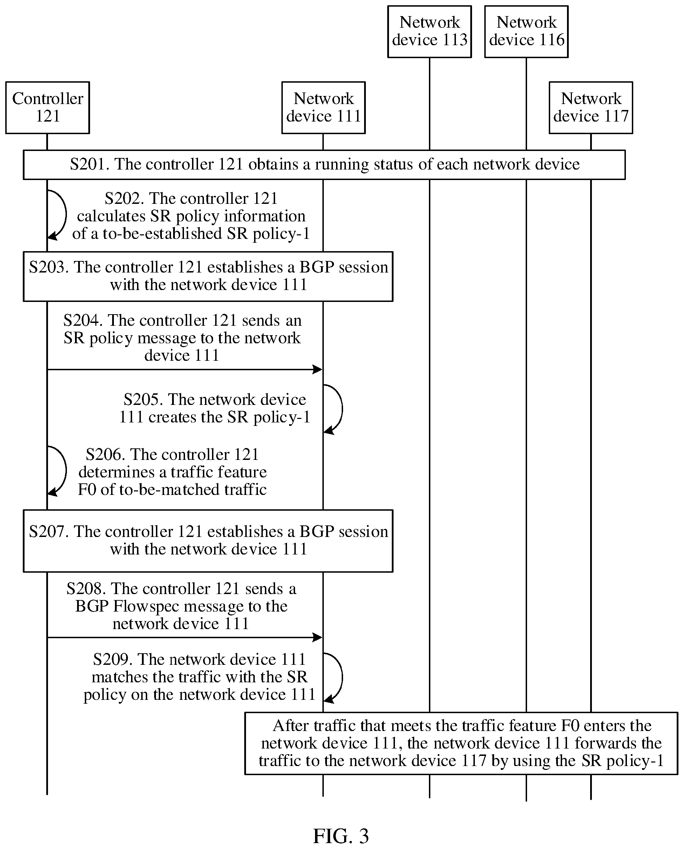

In a conventional technology, when traffic needs to be matched with an SR policy, that the traffic is matched with an SR policy between the network device 111 and the network device 117 in FIG. 2 is used as an example. Implementation steps of the conventional technology are shown in FIG. 3, and include the following steps.

S201. The controller 121 obtains a running status of each network device.

For example, each network device in the transmission network 10 may periodically report a current traffic volume, topology information, routing information, and the like to the controller 121.

S202. The controller 121 calculates SR policy information of a to-be-established SR policy-1 based on information reported by the network device and a policy preset on the controller.

The SR policy information specifically includes information such as a transmission path from a head end device (namely, the network device 111) to a tail end device (namely, the network device 117), and a color of the SR policy-1.

For example, the transmission path may be represented as a SID list: List<S113, S116>. S113 and S116 are respectively identifiers of the network device 113 and the network device 116. Optionally, S113 is an MPLS label or an IPv6 address of the network device 113, and S116 is an MPLS label or an IPv6 address of the network device 116.

S203. The controller 121 establishes a border gateway protocol session (BGP session) with the network device 111.

The controller 121 may send a segment routing policy update message (SR policy message) to the network device 111 by using the BGP session, to indicate the network device 111 to execute a task such as establishing, deleting, or modifying an SR policy.

S204. The controller 121 sends an SR policy message to the head end device (namely, the network device 111) by using the BGP session between the controller 121 and the network device 111.

The SR policy message carries the SR policy information (the transmission path, the color, and the like) calculated by the controller 121 in S202.

S205. The network device 111 creates the SR policy-1 based on the SR policy information carried in the SR policy message.

S206. The controller 121 determines a traffic feature F0 of to-be-matched traffic.

The traffic feature F0 of the to-be-matched traffic may specifically include one or more of information such as a destination address, a source address, a protocol number, an upper-layer protocol number, a port number (including a destination port number and a source port number), an ICMP/ICMPv6 type, a TCP flag, and a DSCP value.

S207. The controller 121 establishes another BGP session with the network device 111.

S208. The controller 121 sends a BGP Flowspec message to the network device 111 by using the BGP session between the controller 121 and the network device 111.

The BGP Flowspec message carries information such as the traffic feature F0 of the to-be-matched traffic, a next-hop node of the to-be-matched traffic, and a color.

S209. The network device 111 matches the traffic with the SR policy on the network device 111 based on the information carried in the BGP Flowspec message.

Specifically, when the network device 111 determines, based on the information carried in the BGP Flowspec message, that the to-be-matched traffic matches the SR policy-1 (for example, the next-hop node of the to-be-matched traffic matches the tail end device of the SR policy-1, and the color carried in the BGP Flowspec message matches the color of the SR policy-1), a traffic steering policy is created on the network device 111: if-match: F0, nexthop: SR-Policy1, in other words, a next hop of traffic matching the traffic feature F0 is the SR policy-1.

In this way, in a subsequent process, after traffic that meets the traffic feature F0 enters the network device 111, the network device 111 may forward the traffic by using the SR policy-1 along a path <the network device 113, the network device 116> specified by the SR policy-1 to the tail end device (namely, the network device 117).

It can be learned that, in the conventional technology, when the traffic is to be matched with the SR policy, the BGP session needs to be first established between the controller 121 and the network device 111 (S203), and the controller sends the SR policy message to the network device (S204) to indicate the network device to establish the SR policy; and then the another BGP session is established between the controller 121 and the network device 111 (S207), and the controller sends the BGP Flowspec message to the network device (S208) to indicate the network device to match the traffic with the established SR policy.

For the conventional technology, it is found in embodiments of this application that: In one aspect, in the conventional technology, after the SR policy message is sent by the controller to the network device to establish the SR policy, if no traffic uses the SR policy, a resource waste is caused. In another aspect, it is considered that in some scenarios, when the controller calculates the SR policy, specific traffic for which the SR policy needs to be used is determined in advance. However, according to the technical solutions of the conventional technology, the controller still needs to deliver control messages to the network device through two times of sending, to respectively indicate to establish the SR policy and match the traffic to the SR policy. Therefore, a problem of low message delivery efficiency exists.

For the problem, in embodiments of this application, it is considered that when traffic needs to be matched with an SR policy, a second network device may send, to a first network device, an advertisement message that carries both SR policy information (where the SR policy information includes a SID list indicating a transmission path) of the to-be-established SR policy and traffic feature information of the to-be-matched traffic.

In this way, the first network device may establish a correspondence between the traffic feature information and the SID list according to the advertisement message, to guide forwarding of a packet including the traffic feature information or guide forwarding of a packet matching the traffic feature information, so that the packet including the traffic feature information or the packet matching the traffic feature information is forwarded through the transmission path of the SID list.

In comparison with the conventional technology, in the technical solutions provided in embodiments of this application, in one aspect, after establishing the SR policy based on the SR policy information carried in the advertisement message, the first network device may establish the correspondence between the traffic feature information and the SID list based on the traffic feature information carried in the advertisement message without waiting for another indication, to guide the packet forwarding, so as to reduce a resource waste. In another aspect, in embodiments of this application, the advertisement message delivered by the second network device to the first network device carries both the SR policy information and the traffic feature information. This improves message delivery efficiency.

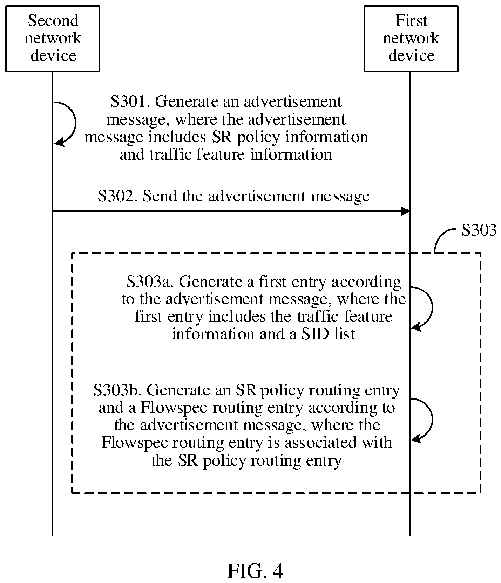

Specifically, FIG. 4 shows a packet forwarding method according to an embodiment of this application, and the method may specifically include the following steps.

S301. A second network device generates an advertisement message.

The advertisement message includes SR policy information and traffic feature information. The SR policy information specifically includes a SID list.

The traffic feature information included in the advertisement message may be specifically represented by using one or more of the 12 common traffic matching rules described above, or may be represented by using another traffic matching rule. Specific content of the traffic feature information may not be limited in embodiments of this application.

The SR policy information included in the advertisement message may specifically include one or more SID lists used to reflect a transmission path. For example, it is similar to FIG. 1 that, the SR policy information may include one or more candidate paths, and each candidate path may include the one or more SID lists used to reflect the transmission path. A quantity of candidate paths specifically included in the SR policy information and a quantity of SID lists included in each candidate path may not be limited in embodiments of this application.

S302. The second network device sends the advertisement message to a first network device.

For example, the traffic is matched with the SR policy between the network device 111 and the network device 117 in FIG. 2. The first network device may be a source node of the SR policy, namely, the network device 111 in FIG. 2. The second network device may be the controller 121, or the second network device may be another network device connected to the network device 111.

The advertisement message indicates the network device to establish a correspondence between the traffic feature information and the SID list, where the correspondence is used to guide forwarding of a packet including the traffic feature information.

Specifically, the advertisement message may be a BGP Flowspec message or an SR policy message.

The BGP Flowspec message is a BGP message used to deliver a flow specification rule (flow specification rule). In some application scenarios, the BGP Flowspec message may also be referred to as a BGP Flowspec update message. The SR policy message is a BGP message used to deliver the SR policy information. In some application scenarios, the SR policy message may also be referred to as an SR policy update message.

In a related standard, BGP messages with different address family identifiers are usually used to implement a function of the BGP Flowspec message or the SR policy message.

For example, in RFC 4760, a BGP message whose subsequent address family identifier (subsequent address family identifier, SAFI) is 73 is used to implement the function of the SR policy message, and a BGP message whose SAFI is 133 is used to implement the function of the BGP Flowspec message.

S303. The first network device establishes the correspondence between the traffic feature information and the SID list according to the advertisement message.

The correspondence between the traffic feature information and the SID list is used to guide the forwarding of the packet that includes the traffic feature information.

In an implementation, S303 may specifically include the following step.

S303a. The first network device generates a first routing entry according to the advertisement message. The first routing entry includes the traffic feature information and the SID list.

In this implementation, it is considered that the correspondence between the traffic feature information and the SID list may be established by creating a routing entry (namely, the first routing entry) including the traffic feature information and the SID list.

The first routing entry includes the SID list. Therefore, an SR policy whose transmission path is the SID list may be established by generating the first routing entry. In addition, in a subsequent packet forwarding process, the packet that meets the traffic feature information may be directed to the SR policy for transmission based on the traffic feature information included in the first routing entry.

In a possible design, the first routing entry may be a Flowspec routing entry.

For example, after the second network device sends a BGP Flowspec message including the traffic feature information and the SR policy information to the first network device, where the BGP Flowspec message is the advertisement message, the first network device may generate a Flowspec routing entry (including the traffic feature information and the SR policy information) according to the BGP Flowspec message, and direct, according to the Flowspec routing entry, the packet that meets the traffic feature information to the SR policy for transmission.

In another possible design, the first routing entry may be an SR policy routing entry.

For example, after the second network device sends an SR policy message including the traffic feature information and the SR policy information to the first network device, where the SR policy message is the advertisement message, the first network device may generate an SR policy routing entry (including the traffic feature information and the SR policy information) according to the SR policy message, and direct, according to the SR policy routing entry, the packet that meets the traffic feature information to the SR policy.

In another implementation, S303 may specifically include the following step.

S303b. Generate an SR policy routing entry and a Flowspec routing entry according to the advertisement message.

The Flowspec routing entry includes the traffic feature information carried in the advertisement message, and the SR policy routing entry includes the SID list carried in the advertisement message. The Flowspec routing entry is associated with the SR policy routing entry.

Specifically, that the Flowspec routing entry is associated with the SR policy routing entry may be understood as that a pointer or an index is established between the Flowspec routing entry and the SR policy routing entry. Based on the pointer or the index, the associated SR policy routing entry can be found by using the Flowspec routing entry, or the associated Flowspec routing entry can be found by using the SR policy routing entry. In this way, during packet forwarding, the Flowspec routing entry may be matched based on the traffic feature information of the packet, and then the associated SR policy routing entry may be found based on the pointer or the index between the Flowspec routing entry and the SR policy routing entry, so that the SID list corresponding to the SR policy can be obtained, and the SID list can be added to the packet, thereby directing the packet to the SR policy for forwarding.

In this implementation, after the first network device receives the advertisement message, the advertisement message may be an SR policy message or a BGP Flowspec message. The first network device may separately generate the Flowspec routing entry including the traffic feature information and the SR policy routing entry including the SID list. Then, the correspondence between the traffic feature information and the SID list is established by establishing an association relationship between the two routing entries.

After the first network device establishes the correspondence between the traffic feature information and the SID list, when the first network device receives the packet that meets the traffic feature information, the first network device may forward the packet based on the correspondence between the traffic feature information and the SID list by using the SR policy that uses the SID list, to implement effect of directing traffic to the specific SR policy.

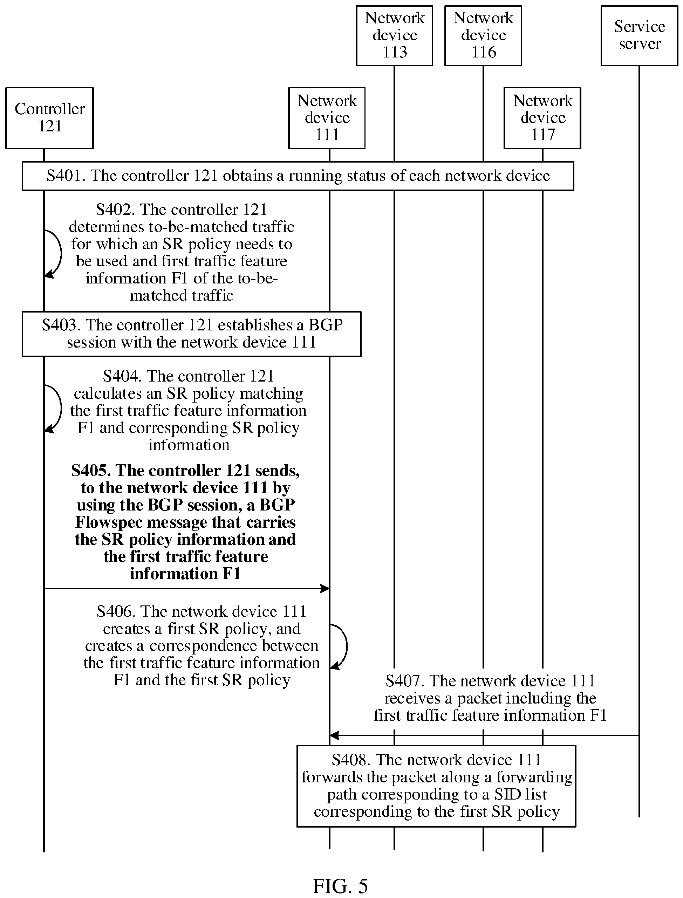

The following describes a specific implementation process of the packet forwarding method provided in embodiments of this application with reference to different application scenarios. Specifically, when a second network device is the controller 121 in FIG. 2, and a first network device is the network device 111 in FIG. 2, that traffic is matched with an SR policy between the network device 111 and the network device 117 in FIG. 2 is used as an example. When the controller 121 sends an advertisement message to the network device 111 by using a BGP Flowspec message, as shown in FIG. 5, the method may include the following steps.

S401. The controller 121 obtains a running status of each network device in a transmission network.

For example, each network device in the transmission network 10 may periodically report a current traffic volume, topology information, routing information, and the like to the controller 121.

S402. The controller 121 determines the to-be-matched traffic for which the SR policy needs to be used and first traffic feature information F1 of the to-be-matched traffic.

For example, the controller 121 may count volumes of traffic of different traffic features and destination nodes of the traffic based on the running status of each network device. Then, based on the volumes of the traffic of different traffic features and the destination nodes of the traffic, the to-be-matched traffic for which the SR policy needs to be used and the first traffic feature information F1 of the to-be-matched traffic are determined.

For another example, the first traffic feature information F1 of the to-be-matched traffic may alternatively be directly manually configured in the controller 121 by a skilled person.

The first traffic feature information F1 may be specifically represented by using one or more of the 12 common traffic matching rules described above, or may be represented by using another traffic matching rule.

S403. The controller 121 establishes a BGP session with the network device 111.

Specifically, for a process of establishing the BGP session by the controller 121, refer to a conventional technology. Details are not described herein again.

S404. The controller 121 calculates, based on information reported by each network device and a policy preset on the controller, an SR policy matching the first traffic feature information F1 and corresponding SR policy information.

In this embodiment of this application, an SR policy in which the network device 111 is a head end device and the network device 117 is a tail end device is used as the SR policy matching the first traffic feature information F1.

The SR policy information specifically includes a SID list. In addition, the SR policy information may further include information such as an address of a head end device of a to-be-established tunnel, an address of a tail end device, a color of the to-be-established tunnel, and an identifier used to distinguish the to-be-established tunnel from another tunnel.

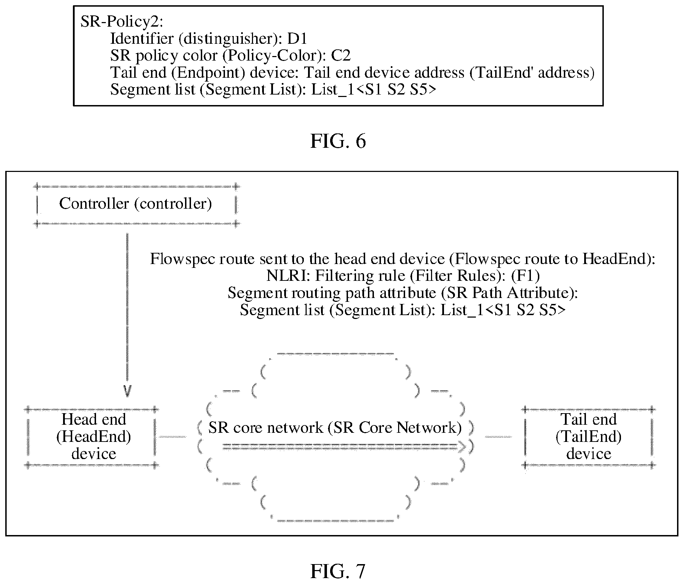

For example, as shown in FIG. 6, SR policy information includes an identifier (distinguish) used to distinguish a to-be-established tunnel from another tunnel: D1; a color (Policy-Color) of the to-be-established SR policy: C2; an address of a tail end (Endpoint) device: TailEnd' address; and a SID list (Segment List) included in the SR policy: List_1<S1 S2 S5>.

As described in S302 above, the SR policy information may specifically include one or more SID lists. For ease of description, an example in which the SR policy information includes a SID list: List<S113, S116> is used below for description.

S405. The controller 121 sends, by using the BGP session between the controller 121 and the network device 111, a BGP Flowspec message to the head end device, namely, the network device 111, of the to-be-established SR policy.

The BGP Flowspec message carries the first traffic feature information F1 and the SR policy information.

In an implementation, the first traffic feature information F1 may be carried in a flow filtering rule (Filter Rules) in NLRI in the BGP Flowspec message.

In an implementation, the SR policy information may be carried in a path attribute in the BGP Flowspec message.

Specifically, in this implementation, it is considered that the BGP Flowspec message includes a plurality of path attributes used to encapsulate different type information. Therefore, during actual application, the SR policy information may be carried in the path attribute.

For example, a new path attribute used to carry the SR policy information may be extended in the BGP Flowspec message, so that the SR policy information may be carried by using the path attribute.

For example, FIG. 7 is an example diagram of sending, by a controller (controller), a BGP Flowspec message to a head end (HeadEnd) device of an SR policy according to an embodiment of this application. The BGP Flowspec message includes NLRI that carries a filtering rule (Filter Rules), where the filtering rule may be specifically the foregoing first traffic feature information F1. In addition, the BGP Flowspec message further includes a path attribute that carries SR policy information, namely, a segment routing path attribute (SR Path Attribute) in the figure, where SR Path Attribute records a segment list of the SR policy.

For another example, the SR policy information may be carried in a path attribute used to encapsulate an extended community attribute in the BGP Flowspec message. Specifically, a new extended community attribute used to carry the SR policy information may be extended in the BGP Flowspec message, so that the SR policy information may be carried by using the extended community attribute.

Further, in a possible design, the BGP Flowspec message includes one or more extended community attributes. Each extended community attribute carries a SID in the SID list included in the SR policy information.

For example, the SID list corresponding to the SR policy information is list<S113, S116>. In this case, in the BGP Flowspec message, two extended community attributes may be used to respectively carry S113 (namely, a SID of a network device 113) and S116 (namely, a SID of a network device 116).

To facilitate determining of a ranking of the SID carried in each extended community attribute in the SID list, in a design, the one or more extended community attributes used to carry the SID further include a ranking identifier indicating the ranking of the corresponding SID in the SID list.

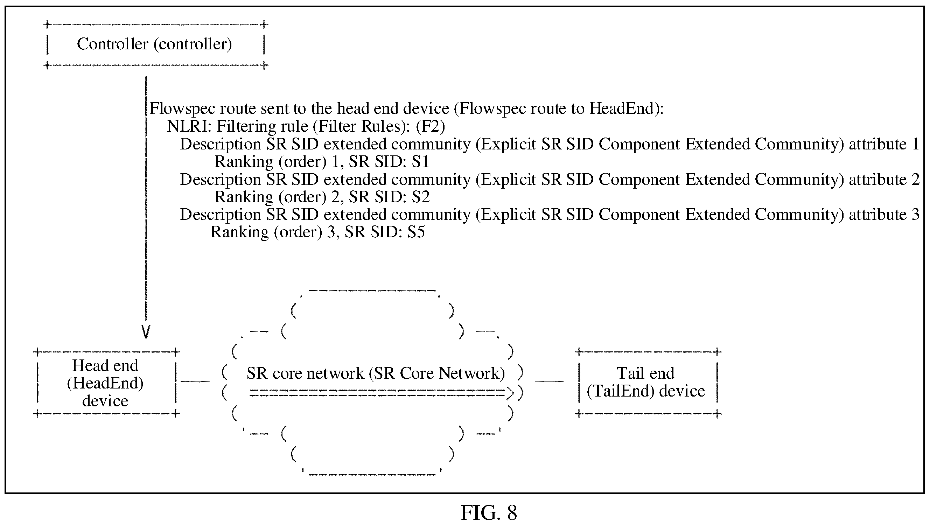

For example, FIG. 8 is an example diagram of sending, by a controller (controller), a BGP Flowspec message to a head end (HeadEnd) device of an SR policy according to an embodiment of this application. The BGP Flowspec message includes NLRI that carries a filtering rule (Filter Rules), where the filtering rule may be specifically the foregoing first traffic feature information F1. In addition, the BGP Flowspec message further includes a plurality of extended community attributes, such as Explicit SR SID Component Extended Community 1, Explicit SR SID Component Extended Community 2, and Explicit SR SID Component Extended Community 3 in FIG. 8. Each extended community attribute includes one SID in the SID list and a ranking (that is, order) of the SID in the SID list.

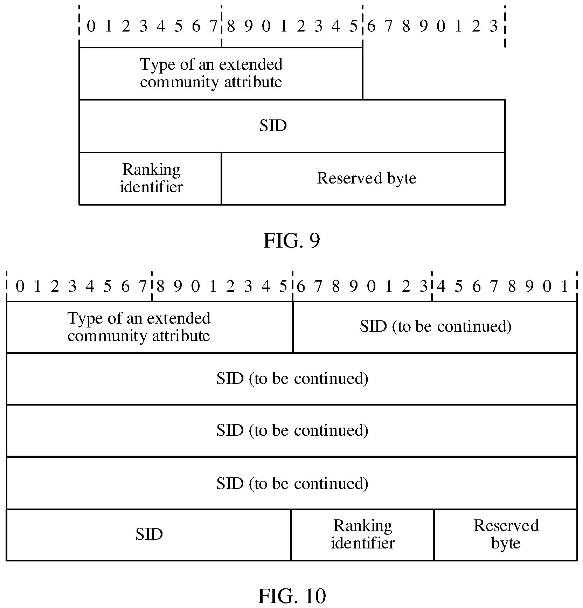

For example, when the established SR policy is an SR-MPLS TE policy, the corresponding extended community attribute has eight bytes. An extended community attribute used for a SID may be referred to as a description segment routing-multiprotocol label switching segment identifier component extended community (explicit SR-MPLS SID 78component extended community) attribute, and a structure of the extended community attribute is shown in FIG. 9.

The first two bytes of the extended community attribute indicate a type of the extended community attribute.

After determining that the current extended community attribute is explicit SR-MPLS SID 78component extended community (namely, an extended community attribute that carries the SR policy information) by using the first two bytes of the extended community attribute, the third to fifth bytes of the extended community attribute are read, so that the SID carried in the current extended community attribute can be obtained.

In addition, the sixth byte of the extended community attribute carries the ranking identifier. Based on the ranking identifier, a position of the SID carried in the current extended community attribute in the SID list can be determined.

In addition, the extended community attribute further includes two reserved bytes for extending a new function. A function of the reserved byte may not be limited in embodiments of this application.

For another example, when the established SR policy is an SRv6 TE policy, the corresponding extended community attribute has 20 bytes. An extended community attribute used to carry a SID may be referred to as a description segment routing IPv6 segment identifier component extended community (explicit SRv6 SID component extended community) attribute, and a structure of the extended community attribute is shown in FIG. 10.

The first two bytes of the extended community attribute indicate a type of the extended community attribute.

After determining that the current extended community attribute is explicit SRv6 SID component extended community (namely, an extended community attribute that carries the SR policy information) by using the first two bytes of the extended community attribute, the third to the 18th bytes of the extended community attribute are read, so that the SID, namely, an IPv6 address of a corresponding transmission node, carried in the current extended community attribute can be obtained.

In addition, the 19th byte of the extended community attribute carries the ranking identifier. Based on the ranking identifier, a position of the SID carried in the current extended community attribute in the SID list can be determined.

In addition, the extended community attribute further includes one reserved byte for extending a new function. A function of the reserved byte may not be limited in embodiments of this application.

In addition, it may be understood that, in an actual application process, the BGP Flowspec message may further include SR policy information other than the SID list, for example, information such as the address of the tail end device of the SR policy and the color of the SR policy. This may not be limited in embodiments of this application.

S406. After receiving the BGP Flowspec message, the network device 111 establishes a first SR policy based on the SR policy information carried in the BGP Flowspec message, and establishes a correspondence between the first traffic feature information F1 and the first SR policy.

Specifically, the network device 111 may establish the first SR policy by generating a routing entry, where the routing entry includes the SID list carried in the SR policy. In addition, the routing entry further includes the first traffic feature information F1. In this way, an objective of establishing the first SR policy and the correspondence between the first traffic feature information F1 and the first SR policy is implemented by generating a routing entry.

As described in S303a above, the routing entry may be a Flowspec routing entry.

In addition, when the network device 111 has a function of generating an SR policy routing entry according to the received BGP Flowspec message, the routing entry may alternatively be an SR policy routing entry.

In addition, after receiving the BGP Flowspec message, as described in S303b above, the network device may alternatively separately generate a Flowspec routing entry including the first traffic feature information F1 and an SR policy routing entry including the SR policy information, and establish a correspondence between the two routing entries.

After the network device 111 establishes the correspondence between the first traffic feature information F1 and the first SR policy, the method may further include the following steps.

S407. The network device 111 receives a packet.

The packet includes the first traffic feature information F1.

Specifically, as shown in FIG. 5, the packet may be a packet sent from a service server to the network device 111. In addition, the packet may alternatively be a packet sent by another network device in the transmission network to the network device 111. This may not be limited in embodiments of this application.

S408. The network device 111 forwards, based on the correspondence between the first traffic feature information F1 and the first SR policy, the packet along a forwarding path corresponding to the SID list corresponding to the first SR policy.

For example, the SID list is encapsulated into the packet, and the packet is first sent by the network device 111 to the network device 113 along the forwarding path corresponding to the SID list: List<S113, S116> corresponding to the first SR policy, and then sent by the network device 113 to the network device 116, and finally sent to a destination node of the packet. Specifically, encapsulating the SID list into the packet may include encapsulating the SID list into a multiprotocol label switching (multiprotocol label switching, MPLS) packet header or a segment routing header (segment routing header, SRH) of the packet.

It may be understood that various numbers in embodiments of this application are merely used for differentiation for ease of description, and are not used to limit the scope of embodiments of this application. For example, in the packet forwarding method described in FIG. 5, a process of establishing the BGP session in S403 may be performed at any time before the BGP Flowspec message is sent in S405. Sequence numbers of the foregoing processes do not mean execution sequences, and the execution sequences of the processes should be determined based on functions and internal logic of the processes.

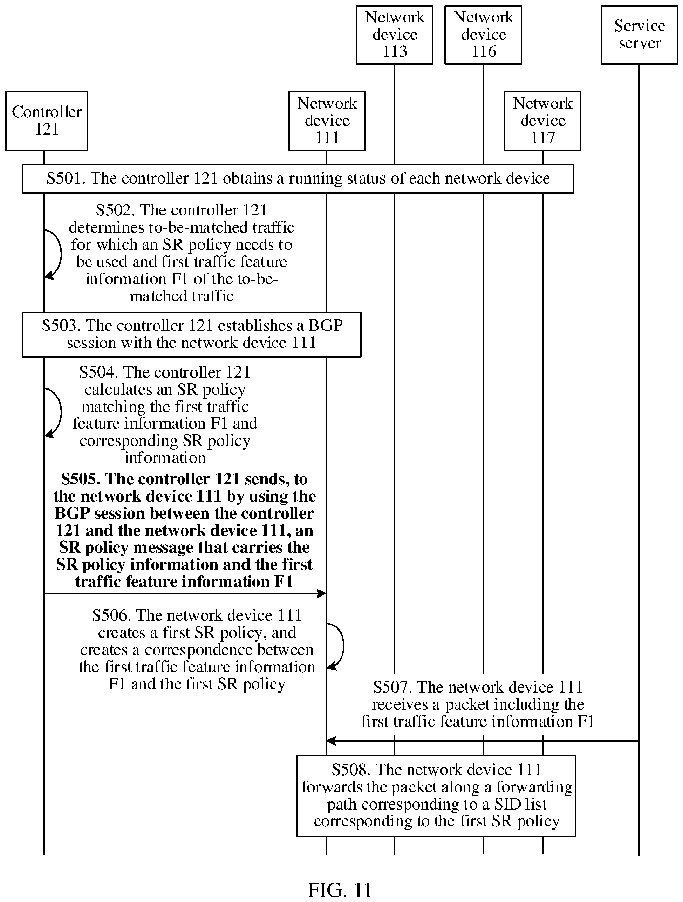

When a first network device is the controller 121 in FIG. 2, and a second network device is the network device 111 in FIG. 2, that traffic is matched with an SR policy between the network device 111 and the network device 117 in FIG. 2 is used as an example. When the controller 121 sends an advertisement message to the network device 111 by using an SR policy message, as shown in FIG. 11, the method may include the following steps.

S501. The controller 121 obtains a running status of each network device in a transmission network.

S502. The controller 121 determines to-be-matched traffic for which a tunnel needs to be used and first traffic feature information F1 of the to-be-matched traffic.

For specific implementation processes of S501 and S502, refer to corresponding content of S401 and S402. Details are not described herein again.

S503. The controller 121 establishes a BGP session with the network device 111.

Specifically, for a process of establishing the BGP session by the controller 121, refer to a conventional technology. Details are not described herein again.

S504. The controller 121 calculates, based on information reported by each network device and a policy preset on the controller, an SR policy matching the first traffic feature information F1 and corresponding SR policy information.

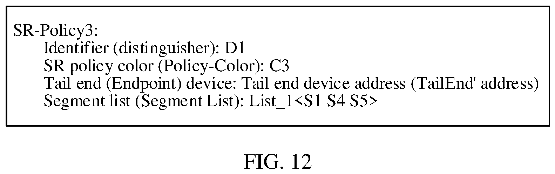

For example, as shown in FIG. 12, the SR policy information includes: an identifier (distinguish) used to distinguish a to-be-established tunnel from another tunnel: D1; a color (Policy-Color) of the to-be-established SR policy: C3; an address of a tail end (Endpoint) device: TailEnd' address; and a SID list (Segment List) included in the SR policy: List_1<S1 S4 S5>.

For a specific implementation process of S504, refer to corresponding content of S404. Details are not described herein again.

S505. The controller 121 sends, by using the BGP session between the controller 121 and the network device 111, an SR policy message to a head end device, namely, the network device 111, of the to-be-established SR policy.

The SR policy message carries the SR policy information of the to-be-established SR policy. The SR policy information includes a SID list path. In addition, the SR policy information may further include information such as an address of a tail end device of the to-be-established SR policy and a color of the to-be-established SR policy. This may not be limited in embodiments of this application.

In addition, the SR policy message further carries first traffic feature information F1.

In an implementation, the SR policy information and the first traffic feature information F1 may be respectively carried in path attributes in the SR policy message.

Specifically, in this implementation, it is considered that the SR policy message includes a plurality of path attributes used to encapsulate various type information. Therefore, during actual application, the SR policy information and the first traffic feature information F1 may be respectively carried in the corresponding path attributes.

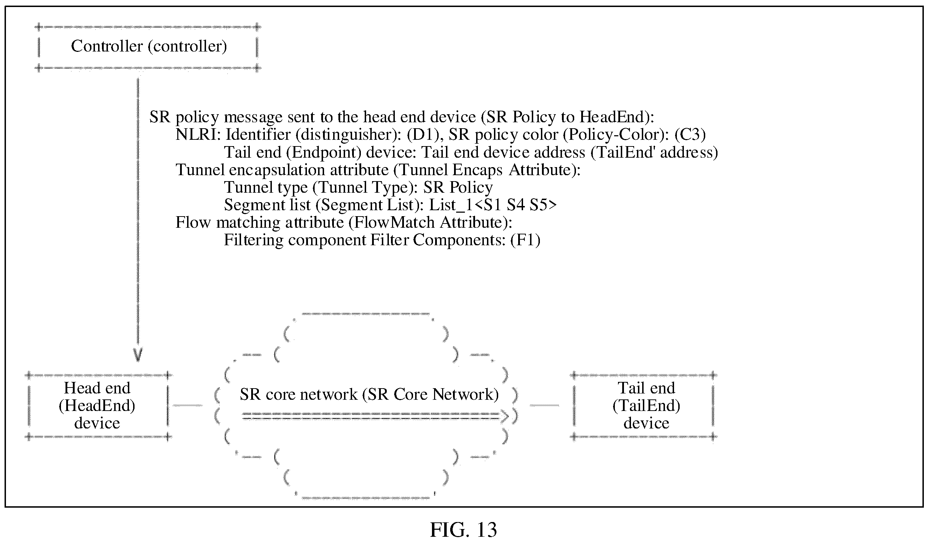

For example, FIG. 13 is an example diagram of sending, by a controller (controller), an SR policy message to a head end (HeadEnd) device of an SR policy according to an embodiment of this application. NLRI in the SR policy message carries an identifier (distinguish) used to distinguish a to-be-established tunnel from another tunnel: D1; a color (Policy-Color) of the to-be-established SR policy: C3; and an address of a tail end (Endpoint) device: TailEnd' address. In addition, a tunnel encapsulation attribute (Tunnel Encaps Attribute) in the SR policy message carries a tunnel type (Tunnel Type): SR Policy and a SID list (Segment List) included in the SR policy: List_1<S1 S4 S5 >.

In addition, the SR policy message further includes a path attribute referred to as a flow matching attribute (FlowMatch Attribute), and is used to carry traffic feature information, namely, Filter Components (F1).

S506. After receiving the SR policy message, the network device 111 establishes a first SR policy based on the SR policy information carried in the SR policy message, and establishes a correspondence between the first traffic feature information F1 and the first SR policy.

Specifically, the network device may establish the first SR policy by generating an SR policy routing entry including the SR policy information. In addition, the SR policy routing entry further includes the first traffic feature information F1. In this way, an objective of establishing the first SR policy and the correspondence between the first traffic feature information F1 and the first SR policy is implemented by generating the SR policy routing entry. In addition, when the network device 111 has a function of generating a Flowspec routing entry according to the received SR policy message, the routing entry may alternatively be a Flowspec routing entry.

In addition, after receiving the SR policy message, as described in S303b above, the network device may alternatively separately generate a Flowspec routing entry including the first traffic feature information F1 and an SR policy routing entry including the SR policy information, and establish a correspondence between the two routing entries.

S507. The network device 111 receives a packet.

The packet includes the first traffic feature information F1.

S508. The network device 111 forwards, based on the correspondence between the first traffic feature information F1 and the first SR policy, the packet along a forwarding path corresponding to a SID list corresponding to the first SR policy.

For specific descriptions of S507 and S508, refer to content of S407 and S408. A repeated part is not described herein again.

In embodiments of this application, it is considered that when traffic needs to be matched with an SR policy, a controller may send, to a network device, an SR policy message that carries both SR policy information (where the SR policy information includes a SID list indicating a transmission path) of the to-be-established SR policy and traffic feature information of the to-be-matched traffic. In this way, after the controller sends the SR policy message to the network device, the network device that receives the SR policy message may establish a correspondence between the traffic feature information and the SID list according to the SR policy message, to guide forwarding of a packet including the traffic feature information, so as to guide forwarding of the packet including the traffic feature information through the transmission path of the SID list. In comparison with a conventional technology, in the technical solutions provided in embodiments of this application, in one aspect, after establishing the SR policy based on the SR policy information carried in the SR policy message, the network device may establish the correspondence between the traffic feature information and the SID list based on the traffic feature information carried in the SR policy message without waiting for another indication of the controller, to guide the packet forwarding, so as to reduce a resource waste. In another aspect, in embodiments of this application, the SR policy message delivered by the controller to the network device carries both the SR policy information and the traffic feature information. This improves message delivery efficiency.

According to the foregoing method embodiments, an embodiment of this application further provides a packet forwarding network device. The following provides descriptions with reference to the accompanying drawings.

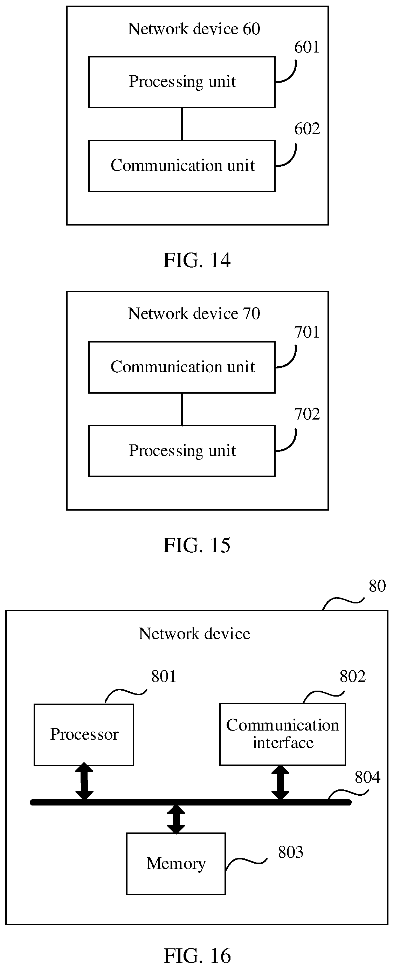

FIG. 14 is a schematic diagram of a possible structure of the network device in the foregoing method embodiments. The network device 60 may implement a function of the first network device in the embodiment shown in FIG. 4, or the network device 60 may implement a function of the controller 121 in the embodiment shown in FIG. 5 or FIG. 11. Refer to FIG. 14. The network device 60 includes a processing unit 601 and a communication unit 602. These units may perform the corresponding functions of the first network device and the controller 121 in the foregoing method examples.

The processing unit 601 is configured to indicate the network device 60 to perform all or some content of S301 in FIG. 4, S401 to S404 in FIG. 5, or S501 to S504 in FIG. 11. The communication unit 602 is configured to indicate the network device 60 to perform all or some content of S302 in FIG. 4, S403 and S405 in FIG. 5, or S503 and S505 in FIG. 11.

For example, the processing unit 601 is used by the first network device in the foregoing method embodiments to generate an advertisement message that includes SR policy information and traffic feature information.

The communication unit 602 is configured to send the advertisement message to a second network device. The advertisement message indicates the first network device to establish a correspondence between the traffic feature information and a SID list, and the correspondence is used to guide forwarding of a packet including the traffic feature information.

Optionally, the advertisement message is a border gateway protocol flow specification message BGP Flowspec message.

Optionally, the advertisement message includes a first path attribute field, and the first path attribute field carries the SR policy information.

Optionally, the advertisement message includes one or more extended community attributes, and the one or more extended community attributes each carry a segment identifier SID in the SID list included in the SR policy information.

Optionally, the one or more extended community attributes each further include a ranking identifier corresponding to the carried SID, and the ranking identifier indicates a ranking of the corresponding SID in the SID list.

Optionally, the advertisement message is a segment routing policy message SR policy message.

Optionally, the SR policy message includes a second path attribute field, and the second path attribute field carries the traffic feature information.

Optionally, the traffic feature information includes one or more of a destination address, a source address, an IP protocol number, a destination port number, a source port number, a packet length, an internet control message protocol ICMP type, ICMP code, a TCP flag, a differentiated services code point DSCP identifier, and an IP segmentation type.

For specific execution processes of the processing unit 601 and the communication unit 602, refer to the detailed descriptions of the corresponding steps in the embodiment shown in FIG. 4, FIG. 5, or FIG. 11. Details are not described herein again.

It should be noted that, in embodiments of this application, division into the units is an example, and is merely a logical function division. During actual implementation, there may be another division manner. Functional units in embodiments of this application may be integrated into one processing unit, or each of the units may exist alone physically, or two or more units may be integrated into one unit. For example, in the foregoing embodiment, the processing unit and a sending unit may be a same unit, or may be different units. The integrated unit may be implemented in a form of hardware, or may be implemented in a form of a software functional unit.

FIG. 15 is a schematic diagram of another possible structure of the network device in the foregoing method embodiments. The network device 70 may implement a function of the second network device in the embodiment shown in FIG. 4, or the network device 70 may implement a function of the network device 111 in the embodiment shown in FIG. 5 or FIG. 11. Refer to FIG. 15. The network device 70 includes a communication unit 701 and a processing unit 702. These units may perform the corresponding functions of the second network device and the network device 111 in the foregoing method examples.

The communication unit 701 is configured to indicate the network device 70 to perform all or some content of S302 in FIG. 4, S403, S405, S407, and S408 in FIG. 5, or S503, S505, S507, and S508 in FIG. 11. The processing unit 702 is configured to indicate the network device 70 to perform all or some content of S303 in FIG. 4, S406 and S408 in FIG. 5, or S506 and S508 in FIG. 11.

For example, the communication unit 701 is configured to support the network device 70 in receiving an advertisement message sent by another network device. The advertisement message includes segment routing policy SR policy information and traffic feature information, and the SR policy information includes a segment identifier list SID list.

The processing unit 702 is configured to support the network device 70 in establishing a correspondence between the traffic feature information and the SID list according to the advertisement message, where the correspondence is used to guide forwarding of a packet including the traffic feature information.

Optionally, the processing unit 702 is specifically configured to generate a routing entry according to the advertisement message, where the routing entry includes the correspondence between the traffic feature information and the SID list.

Optionally, the routing entry is a Flowspec routing entry.

Optionally, the advertisement message may be a border gateway protocol flow specification message BGP Flowspec message.

Optionally, the advertisement message includes a first path attribute field, and the first path attribute field carries the SR policy information.

Optionally, the advertisement message includes one or more extended community attributes, and each extended community attribute carries a segment identifier SID in the SID list included in the SR policy information.

Optionally, the one or more extended community attributes each further include a ranking identifier corresponding to the carried SID, and the ranking identifier indicates a ranking of the corresponding SID in the SID list.

Optionally, the routing entry is an SR policy routing entry.

Optionally, the advertisement message is a segment routing policy message SR policy message.

Optionally, the advertisement message includes a second path attribute field, and the second path attribute field carries the traffic feature information.

Optionally, the routing entry further includes a color color of the SR policy.

Optionally, the processing unit 702 is specifically configured to generate an SR policy routing entry and a Flowspec routing entry according to the advertisement message, where the Flowspec routing entry includes the traffic feature information, and the Flowspec routing entry is associated with the SR policy routing entry.

Optionally, the communication unit 701 is further configured to receive a packet, where the packet includes the traffic feature information.

The processing unit 702 is further configured to forward, based on the correspondence, the packet along a forwarding path corresponding to the SID list.

Optionally, the traffic feature information includes one or more of a destination address, a source address, an IP protocol number, a destination port number, a source port number, a packet length, an internet control message protocol ICMP type, ICMP code, a TCP flag, a differentiated services code point DSCP identifier, and an IP segmentation type.

For specific execution processes of the communication unit 701 and the processing unit 702, refer to the detailed descriptions of the corresponding steps in the embodiment shown in FIG. 4, FIG. 5, or FIG. 11. Details are not described herein again.

It should be noted that, in embodiments of this application, division into the units is an example, and is merely a logical function division. During actual implementation, there may be another division manner. Functional units in embodiments of this application may be integrated into one processing unit, or each of the units may exist alone physically, or two or more units may be integrated into one unit. For example, in the foregoing embodiment, the processing unit and a sending unit may be a same unit, or may be different units. The integrated unit may be implemented in a form of hardware, or may be implemented in a form of a software functional unit.

FIG. 16 is a schematic diagram of a structure of another network device according to an embodiment. The network device may be, for example, the first network device or the second network device in the method embodiment shown in FIG. 4, the controller 121 or the network device 111 in the method embodiments shown in FIG. 5 and FIG. 11, or the network device 60 in FIG. 14 and the network device 70 in FIG. 15.

Refer to FIG. 16. The network device 80 includes a processor 801, a communication interface 802, and a memory 803. There may be one or more processors 801 in a packet forwarding device 80. In FIG. 16, one processor is used as an example. In this embodiment of this application, the processor 801, the communication interface 802, and the memory 803 may be connected by using a bus system or in another manner. In FIG. 16, an example in which the processor 801, the communication interface 802, and the memory 803 are connected by using a bus system 804 is used.

The processor 801 may be a central processing unit (central processing unit, CPU), a network processor (network processor, NP), or a combination of the CPU and the NP. The processor 801 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field programmable gate array, FPGA), a generic array logic (generic array logic, GAL), or any combination thereof.

The communication interface 802 is configured to receive and send data. Specifically, the communication interface 802 may include a receiving interface and a sending interface. The receiving interface may be configured to receive the data, and the sending interface may be configured to send the data. There may be one or more communication interfaces 802.

The memory 803 may include a volatile memory (volatile memory), such as a random access memory (random access memory, RAM). Alternatively, the memory 803 may include a non-volatile memory (non-volatile memory), such as a flash memory (flash memory), a hard disk drive (hard disk drive, HDD), or a solid-state drive (solid-state drive, SSD). Alternatively, the memory 803 may include a combination of the foregoing types of memories. The memory 803 may store, for example, the advertisement message mentioned above.

Optionally, the memory 803 stores an operating system and a program, an executable module or a data structure, a subset thereof, or an extended set thereof, where the program may include various operation instructions, to implement various operations. The operating system may include various system programs, to implement various basic services and process a hardware-based task. The processor 801 may read the program in the memory 803, to implement the method provided in embodiments of this application.

The memory 803 may be a storage component in the network device 80, or may be a storage apparatus independent of the network device 80.

The bus system 804 may be a peripheral component interconnect (peripheral component interconnect, PCI) bus, an extended industry standard architecture (extended industry standard architecture, EISA) bus, or the like. The bus system 804 may be classified into an address bus, a data bus, a control bus, and the like. For ease of description, the bus system in FIG. 16 is represented by using only one bold line. However, this does not represent that there is only one bus or one type of bus.

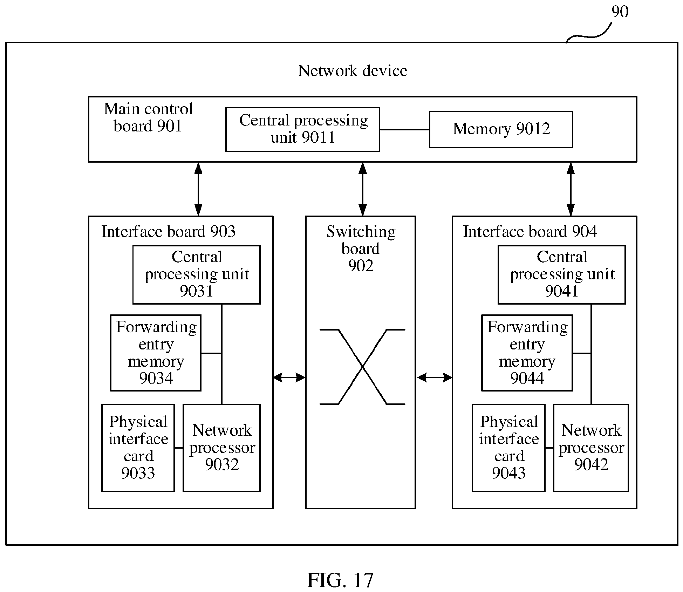

FIG. 17 is a schematic diagram of a structure of another network device 90 according to an embodiment of this application. The network device 90 may be configured as the first network device or the second network device in the embodiment shown in FIG. 4, the controller 121 and the network device 111 in FIG. 5 and FIG. 11, or the network device 60 in FIG. 14 and the network device 70 in FIG. 15 may be implemented by using the network device shown in FIG. 17.

The network device 90 includes a main control board 901 and an interface board 903.

The main control board 901 is also referred to as a main processing unit (main processing unit, MPU) or a route processor card (route processor card). The main control board 901 is configured to control and manage each component in the network device 90, and includes functions of route calculation, device management, device maintenance, and protocol processing. The main control board 901 includes a central processing unit 9011 and a memory 9012.

The interface board 903 is also referred to as a line interface unit card (line processing unit, LPU), a line card (line card), or a service board. The interface board 903 is configured to provide various service interfaces and implement data packet forwarding. The service interface includes but is not limited to an Ethernet interface, a POS (Packet over SONET/SDH) interface, and the like. The Ethernet interface is, for example, a flexible Ethernet client (flexible Ethernet client, FlexE Client). The interface board 903 includes a central processing unit 9031, a network processor 9032, a forwarding entry memory 9034, and a physical interface card (physical interface card, PIC) 9033.

The central processing unit 9031 on the interface board 903 is configured to control and manage the interface board 903 and communicate with the central processing unit 9011 on the main control board 901.

The network processor 9032 is configured to implement packet forwarding processing. A form of the network processor 9032 may be a forwarding chip. Specifically, processing of an uplink packet includes processing a packet inbound interface and searching a forwarding table, and processing of a downlink packet includes searching the forwarding table and the like.

The physical interface card 9033 is configured to implement a physical layer interconnection function. Original traffic enters the interface board 903 from the physical interface card 9033, and a processed packet is sent from the physical interface card 9033. The physical interface card 9033 includes at least one physical interface. The physical interface is also referred to as a physical port. The physical interface card 9033, also referred to as a subcard, may be installed on the interface board 903, and is responsible for converting an optical/electrical signal into a packet, performing validity check on the packet, and forwarding the packet to the network processor 9032 for processing. In some embodiments, the central processing unit 9031 of the interface board 1103 may also perform a function of the network processor 9032, for example, implement software forwarding based on a general-purpose CPU. Therefore, the network processor 9032 is not required in the physical interface card 9033.

Optionally, the network device 90 includes a plurality of interface boards. For example, the network device 90 further includes an interface board 904. The interface board 904 includes a central processing unit 9041, a network processor 9042, a forwarding entry memory 9044, and a physical interface card 9043.

Optionally, the network device 90 further includes a switching board 902. The switching board 902 may also be referred to as a switch fabric unit (switch fabric unit, SFU). When the network device has a plurality of interface boards 903, the switching board 902 is configured to complete data exchange between the interface boards. For example, the interface board 903 and the interface board 904 may communicate with each other by using the switching board 902.

The main control board 901 is coupled to the interface board 903. For example, the main control board 901, the interface board 903, the interface board 904, and the switching board 902 are connected to a system backplane through a system bus to implement interworking. In a possible implementation, an inter-process communication (inter-process communication, IPC) protocol channel is established between the main control board 901 and the interface board 903, and the main control board 901 and the interface board 903 communicate with each other through the IPC channel.

Logically, the network device 90 includes a control plane and a forwarding plane. The control plane includes the main control board 901 and the central processing unit 9031. The forwarding plane includes various components for forwarding, for example, the forwarding entry memory 9034, the physical interface card 9033, and the network processor 9032. The control plane implements functions of a router, generating the forwarding table, processing signaling and a protocol packet, configuring and maintaining a device status, and the like. The control plane delivers the generated forwarding table to the forwarding plane. On the forwarding plane, the network processor 9032 performs, according to the forwarding table delivered by the control plane, table lookup and forwarding on a packet received by the physical interface card 9033. The forwarding table delivered by the control plane may be stored in the forwarding entry memory 9034. In some embodiments, the control plane and the forwarding plane may be completely separated, and are not on a same device.

It should be understood that the processing unit 702 in the network device 700 may be equivalent to the central processing unit 9011 or the central processing unit 9031 in the network device 90.

It should be understood that, in this embodiment of this application, an operation on the interface board 904 is consistent with an operation on the interface board 903. For brevity, details are not described again. It should be understood that the network device 90 in this embodiment of this application may correspond to the first network device or the second network device in the foregoing method embodiments, and the main control board 901, and the interface board 903 and/or the interface board 904 in the network device 90 may implement functions and/or various steps implemented by the first network device or the second network device in the foregoing method embodiments. For brevity, details are not described herein again.

It may be understood that there may be one or more main control boards. When there are a plurality of main control boards, the main control boards may include an active main control board and a standby main control board. There may be one or more interface boards. A network device with a stronger data processing capability provides a larger quantity of interface boards. There may also be one or more physical interface cards on the interface board. There may be no switching board or one or more switching boards. When there are a plurality of switching boards, load balancing and redundancy backup may be implemented together. In a centralized forwarding architecture, a network device may not need a switching board, and an interface board performs a function of processing service data of an entire system. In a distributed forwarding architecture, a network device may have at least one switching board, and implements data exchange between a plurality of interface boards by using the switching board, to provide a large-capacity data exchange and processing capability. Therefore, a data access and processing capability of the network device in the distributed architecture is better than that of the device in the centralized architecture. Optionally, the network device may alternatively be in a form in which there is only one card. To be specific, there is no switching board, and functions of the interface board and the main control board are integrated on the card. In this case, the central processing unit on the interface board and the central processing unit on the main control board may be combined to form one central processing unit on the card, to perform functions obtained by combining the two central processing units This form of device (for example, a network device such as a low-end switch or a router) has a weak data exchange and processing capability. A specific architecture that is to be used depends on a specific networking deployment scenario.

In some possible embodiments, the first network device or the second network device may be implemented as a virtualized device. For example, the virtualized device may be a virtual machine (virtual machine, VM) on which a program having a packet sending function is run, and the virtual machine is deployed on a hardware device (for example, a physical server). The virtual machine is a complete software-simulated computer system that has complete hardware system functions and that runs in an entirely isolated environment. The virtual machine may be configured as the first network device or the second network device. For example, the first network device or the second network device may be implemented based on a general-purpose physical server in combination with a network functions virtualization (network functions virtualization, NFV) technology. The first network device or the second network device is a virtual host, a virtual router, or a virtual switch. After reading this application, with reference to the NFV technology, a person skilled in the art may virtualize, on the general-purpose physical server, the first network device or the second network device having the foregoing functions. Details are not described herein again.

It should be understood that the network devices in the foregoing product forms respectively have any functions of the first network device or the second network device in the foregoing method embodiments. Details are not described herein again.

An embodiment of this application further provides a chip, including a processor and an interface circuit. The interface circuit is configured to receive instructions and transmit the instructions to the processor. The processor may be configured to perform the foregoing packet forwarding method. The processor is coupled to a memory. The memory is configured to store a program or the instructions. When the program or the instructions are executed by the processor, the chip system is enabled to implement the method in any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processor (digital signal processor, DSP), a microcontroller (micro controller unit, MCU), or a programmable controller (programmable logic device, PLD) or another integrated chip.

An embodiment of this application further provides a computer-readable storage medium, including instructions or a computer program. When the instructions or the computer program is run on a computer, the computer is enabled to perform the packet forwarding method provided in the foregoing embodiments.

An embodiment of this application further provides a computer program product including instructions or a computer program. When the computer program product runs on a computer, the computer is enabled to perform the packet forwarding method provided in the foregoing embodiments.

In the specification, claims, and accompanying drawings of this application, the terms "first", "second", "third", "fourth", and the like (if existent) are intended to distinguish between similar objects but do not necessarily indicate a specific order or sequence. It should be understood that data used in this way is interchangeable in an appropriate circumstance, so that embodiments described herein can be implemented in an order other than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to the process, method, product, or device.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, division into the units is merely logical service division. During actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, in other words, may be located in one position, or may be distributed on a plurality of network units. Some or all of the units may be selected according to actual requirements to achieve the objectives of the solutions of embodiments in this application.

In addition, service units in embodiments of this application may be integrated into one processing unit, or each unit may exist alone physically, or two or more units may be integrated into one unit. The integrated unit may be implemented in a form of hardware, or may be implemented in a form of a software service unit.

When the integrated unit is implemented in the form of the software service unit and sold or used as an independent product, the integrated unit may be stored in a computer-readable storage medium. Based on this understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

A person skilled in the art should be aware that in the foregoing one or more examples, the services described in this application may be implemented by hardware, software, firmware, or any combination thereof. When implemented by software, these services may be stored in a computer-readable medium or transmitted as one or more instructions or code on the computer-readable medium. The computer-readable medium includes a computer storage medium and a communication medium, where the communication medium includes any medium that enables a computer program to be transmitted from one place to another. The storage medium may be any available medium accessible to a general-purpose or dedicated computer.

In the foregoing specific implementations, the objectives, technical solutions, and benefits of this application are further described in detail. It should be understood that the foregoing descriptions are merely specific implementations of this application.

The foregoing embodiments are merely used to describe the technical solutions of this application, but not to limit the technical solutions. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A packet forwarding method, wherein the method is applied to a first network device, and the method comprises:
receiving an advertisement message sent by a second network device, wherein the advertisement message comprises segment routing policy SR policy information and traffic feature information, and the SR policy information comprises a segment identifier list SID list; and
establishing a correspondence between the traffic feature information and the SID list according to the advertisement message, wherein the correspondence is used to guide forwarding of a packet comprising the traffic feature information.

2. The method according to claim 1, wherein the establishing a correspondence between the traffic feature information and the SID list according to the advertisement message comprises:
generating a routing entry according to the advertisement message, wherein the routing entry comprises the correspondence between the traffic feature information and the SID list.

3. The method according to claim 2, wherein the routing entry is a Flowspec routing entry.

4. The method according to any one of claims 1 to 3, wherein the advertisement message is a border gateway protocol flow specification message BGP Flowspec message.

5. The method according to claim 4, wherein the advertisement message comprises a first path attribute field, and the first path attribute field carries the SR policy information.

6. The method according to claim 4 or 5, wherein the advertisement message comprises one or more extended community attributes, and each extended community attribute carries a segment identifier SID in the SID list comprised in the SR policy information.

7. The method according to claim 6, wherein the one or more extended community attributes each further comprise a ranking identifier corresponding to the carried SID, and the ranking identifier indicates a ranking of the corresponding SID in the SID list.

8. The method according to claim 2, wherein the routing entry is an SR policy routing entry.

9. The method according to claim 1, 2, or 8, wherein the advertisement message is a segment routing policy message SR policy message.

10. The method according to claim 9, wherein the advertisement message comprises a second path attribute field, and the second path attribute field carries the traffic feature information.

11. The method according to any one of claims 2 to 10, wherein the routing entry further comprises a color of an SR policy.

12. The method according to claim 1, wherein the establishing a correspondence between the traffic feature information and the SID list according to the advertisement message comprises:
generating an SR policy routing entry and a Flowspec routing entry according to the advertisement message, wherein the Flowspec routing entry comprises the traffic feature information, and the Flowspec routing entry is associated with the SR policy routing entry.

13. The method according to any one of claims 1 to 12, wherein the method further comprises:
receiving a packet, wherein the packet comprises the traffic feature information; and
forwarding, based on the correspondence, the packet along a forwarding path corresponding to the SID list.

14. The method according to any one of claims 1 to 13, wherein the traffic feature information comprises one or more of a destination address, a source address, an IP protocol number, a destination port number, a source port number, a packet length, an internet control message protocol ICMP type, ICMP code, a TCP flag, a differentiated services code point DSCP identifier, and an IP segmentation type.

15. A packet forwarding method, wherein the method is applied to a second network device and comprises:
generating an advertisement message, wherein the advertisement message comprises segment routing policy SR policy information and traffic feature information, and an SR policy comprises a segment identifier list SID list; and
sending the advertisement message to a first network device, wherein the advertisement message indicates the first network device to establish a correspondence between the traffic feature information and the SID list, and the correspondence is used to guide forwarding of a packet comprising the traffic feature information.

16. The method according to claim 15, wherein the advertisement message is a border gateway protocol flow specification message BGP flowspec message.

17. The method according to claim 16, wherein the advertisement message comprises a first path attribute field, and the first path attribute field carries the SR policy information.

18. The method according to claim 16 or 17, wherein the advertisement message comprises one or more extended community attributes, and the one or more extended community attributes each carry a segment identifier SID in the SID list comprised in the SR policy information.

19. The method according to claim 18, wherein the one or more extended community attributes each further comprise a ranking identifier corresponding to the carried SID, and the ranking identifier indicates a ranking of the corresponding SID in the SID list.

20. The method according to claim 15, wherein the advertisement message is a segment routing policy message SR policy message.

21. The method according to claim 20, wherein the advertisement message comprises a second path attribute field, and the second path attribute field carries the traffic feature information.

22. The method according to any one of claims 15 to 21, wherein the traffic feature information comprises one or more of a destination address, a source address, an IP protocol number, a destination port number, a source port number, a packet length, an internet control message protocol ICMP type, ICMP code, a TCP flag, a differentiated services code point DSCP identifier, and an IP segmentation type.

23. A first network device, comprising:
a communication unit, configured to receive an advertisement message sent by a second network device, wherein the advertisement message comprises segment routing policy SR policy information and traffic feature information, and the SR policy information comprises a segment identifier list SID list; and
a processing unit, configured to establish a correspondence between the traffic feature information and the SID list according to the advertisement message, wherein the correspondence is used to guide forwarding of a packet comprising the traffic feature information.

24. The first network device according to claim 23, wherein that the processing unit is configured to establish the correspondence between the traffic feature information and the SID list according to the advertisement message comprises:
the processing unit is specifically configured to generate a routing entry according to the advertisement message, wherein the routing entry comprises the correspondence between the traffic feature information and the SID list.

25. The first network device according to claim 24, wherein the routing entry is a Flowspec routing entry.

26. The first network device according to any one of claims 23 to 25, wherein the advertisement message is a border gateway protocol flow specification message BGP Flowspec message.

27. The first network device according to claim 26, wherein the advertisement message comprises a first path attribute field, and the first path attribute field carries the SR policy information.

28. The first network device according to claim 26 or 27, wherein the advertisement message comprises one or more extended community attributes, and each extended community attribute carries a segment identifier SID in the SID list comprised in the SR policy information.

29. The first network device according to claim 28, wherein the one or more extended community attributes each further comprise a ranking identifier corresponding to the carried SID, and the ranking identifier indicates a ranking of the corresponding SID in the SID list.

30. The first network device according to claim 24, wherein the routing entry is an SR policy routing entry.

31. The first network device according to claim 23, 24, or 30, wherein the advertisement message is a segment routing policy message SR policy message.

32. The first network device according to claim 31, wherein the advertisement message comprises a second path attribute field, and the second path attribute field carries the traffic feature information.

33. The first network device according to any one of claims 24 to 32, wherein the routing entry further comprises a color color of an SR policy.

34. The first network device according to claim 23, wherein that the processing unit is configured to establish the correspondence between the traffic feature information and the SID list according to the advertisement message comprises:
the processing unit is configured to generate an SR policy routing entry and a Flowspec routing entry according to the advertisement message, wherein the Flowspec routing entry comprises the traffic feature information, and the Flowspec routing entry is associated with the SR policy routing entry.

35. The first network device according to any one of claims 23 to 34, wherein
the communication unit is further configured to receive a packet, wherein the packet comprises the traffic feature information; and
the processing unit is further configured to forward, based on the correspondence, the packet along a forwarding path corresponding to the SID list.

36. The first network device according to any one of claims 23 to 35, wherein the traffic feature information comprises one or more of a destination address, a source address, an IP protocol number, a destination port number, a source port number, a packet length, an internet control message protocol ICMP type, ICMP code, a TCP flag, a differentiated services code point DSCP identifier, and an IP segmentation type.

37. A second network device, comprising:
a processing unit, configured to generate an advertisement message, wherein the advertisement message comprises segment routing policy SR policy information and traffic feature information, and an SR policy comprises a segment identifier list SID list; and
a communication unit, configured to send the advertisement message to a first network device, wherein the advertisement message indicates the first network device to establish a correspondence between the traffic feature information and the SID list, and the correspondence is used to guide forwarding of a packet comprising the traffic feature information.

38. The second network device according to claim 37, wherein the advertisement message is a border gateway protocol flow specification message BGP Flowspec message.

39. The second network device according to claim 37, wherein the advertisement message comprises a first path attribute field, and the first path attribute field carries the SR policy information.

40. The second network device according to claim 38 or 39, wherein the advertisement message comprises one or more extended community attributes, and the one or more extended community attributes each carry a segment identifier SID in the SID list comprised in the SR policy information.

41. The second network device according to claim 40, wherein the one or more extended community attributes each further comprise a ranking identifier corresponding to the carried SID, and the ranking identifier indicates a ranking of the corresponding SID in the SID list.

42. The second network device according to claim 37, wherein the advertisement message is a segment routing policy message SR policy message.

43. The second network device according to claim 42, wherein the advertisement message comprises a second path attribute field, and the second path attribute field carries the traffic feature information.

44. The second network device according to any one of claims 37 to 43, wherein the traffic feature information comprises one or more of a destination address, a source address, an IP protocol number, a destination port number, a source port number, a packet length, an internet control message protocol ICMP type, ICMP code, a TCP flag, a differentiated services code point DSCP identifier, and an IP segmentation type.

45. A first network device, comprising a processor and an interface, wherein the processor receives or sends data through the interface, and the processor is configured to implement the method according to any one of claims 1 to 14.

46. A second network device, comprising a processor and an interface, wherein the processor receives or sends data through the interface, and the processor is configured to implement the method according to any one of claims 15 to 22.

47. A network system, comprising the first network device according to any one of claims 23 to 36 or claim 45 and the second network device according to any one of claims 37 to 44 or claim 46.

48. A computer-readable storage medium, wherein the computer-readable storage medium stores instructions, and when the instructions are run on a processor, the method according to any one of claims 1 to 22 is implemented.

49. A computer program product, wherein the computer program product comprises instructions, and when the instructions are run on a processor, the method according to any one of claims 1 to 22 is implemented.
